# EUROPEAN PATENT APPLICATION

(11) **EP 1 956 816 A1**
(43) Date of publication of application: **13.08.2008**
(21) Application number: 07120421.8
(22) Date of filing: 09.11.2007
(51) Int. Cl.: H04M 3/436, H04M 3/38

(54) **System and method of establishing a telephone connection**

(30) Priority: 08.02.2007 NL 1033356
(71) Applicant: DLB Finance & Consultancy B.V., 4874 LV Etten-Leur (NL); HITD Information Technology B.V., 3181 NM Rozenburg (NL)
(72) Inventor: Benschop, Dirk Leonard, 4874 LV, Etten-Leur (NL); Benschop, Henderik Reinout, 3181 NM, Rozenburg (NL)
(74) Representative: van Looijengoed, Ferry Antoin Theodorus

(57) **Abstract**

The invention relates to a system and method of establishing a telephone connection between an A-subscriber device and a B-subscriber device in a telephone system is proposed. The method involves receiving a first approval signal from a first approval device before establishing the telephone connection. The first approval signal signals the approval of a user of the A-subscriber device to establish the telephone connection with the B-subscriber device. Also, a second approval signal is received from a second approval device before establishing the telephone connection. The second approval signal signals the approval of a user of the B-subscriber device to establish the telephone connection with the A-subscriber device. In the proposed method, the telephone connection is established between the A-subscriber device and the B-subscriber device only after receiving the first approval signal and the second approval signal.

## Description

### FIELD OF THE INVENTION

The invention relates to a system and method of establishing a telephone connection. More specifically, the invention relates to a system and method of establishing a telephone connection between an A-subscriber device and a B-subscriber device in a telephone system, and particularly to the phase preceding the establishment of the telephone connection.

### BACKGROUND OF THE INVENTION

Telephone calls are progressively experienced as intrusions in the daily life of people. Even more than e.g. e-mail spam messages, unsolicited telephone calls are considered undesired, time-consuming and annoying. Furthermore, the field of e-mail spam prevention has seen considerable development, whereas filters for unsolicited telephone calls appear to have advanced less.

Therefore, various options have been considered in reducing unsolicited telephone calls.

One of the options includes the use of secret telephone numbers. However, secret telephone numbers are inconvenient for a number of reasons. If the secrecy is broken, a new telephone number is required. Also, the owner of the secret telephone number may be difficult to contact for someone not knowing the telephone number.

There exists a need in the art for another approach for reducing unsolicited telephone calls.

### SUMMARY OF THE INVENTION

It is an object of the present invention to provide a method and system for establishing a telephone connection wherein the number of unsolicited telephone calls can be reduced.

To that end, a method of establishing a telephone connection between an A-subscriber device (the calling device) and a B-subscriber device (the called device) in a telephone system is proposed. The method involves receiving a first approval signal from a first approval device before establishing the telephone connection. The first approval signal signals the approval of a user of the A-subscriber device to establish the telephone connection with the B-subscriber device. Also, a second approval signal is received from a second approval device before establishing the telephone connection. The second approval signal signals the approval of a user of the B-subscriber device to establish the telephone connection with the A-subscriber device. In the proposed method, the telephone connection is established between the A-subscriber device and the B-subscriber device only after receiving the first approval signal and the second approval signal.

A computer program for performing the method and a carrier containing the computer program are also proposed.

Furthermore, a system for establishing a telephone connection between an A-subscriber device and a B-subscriber device is proposed. The system comprises an approval system. The approval system is configured for receiving a first approval signal from a first approval device before establishing the telephone connection. The first approval signal signals the approval of a user of the A-subscriber device to establish a telephone connection with the B-subscriber device. The approval system is also configured for receiving a second approval signal from a second approval device before establishing the telephone connection. The second approval signal signals the approval of a user of the B-subscriber device to establish a telephone connection with the A-subscriber device. The approval system is configured for establishing the telephone connection between the A-subscriber device and the B-subscriber device only after receiving the first approval signal and the second approval signal.

The applicant has realized that an approval approach before a telephone connection between two devices is allowed may considerably reduce the number of unsolicited telephone calls. Initially, all participants to the system are blacklisted, i.e. telephone calls can not be received from any of the participants. Of course, a participant may decide that he can only be contacted by participants of the system, such that non-participants are not able to establish a telephone connection with the participant. Only after both the user of the A-subscriber device and the user of the B-subscriber device have signaled the approval for establishing a telephone connection, the telephone connection can be established. In other words, white-listing of a contact is only possible if both approval signals have been received. The white lists are maintained may be maintained at the approval system. Of course, it is not required that the telephone connection is immediately established after receiving the second approval signal. The telephone connection, however, is allowed after having received both approval signals.

It should be appreciated that the system may include a system or network of a conventional fixed telephone system (e.g POTS), a mobile or wireless telecommunication system, combinations thereof as well as an internet telephony system using e.g. voice over IP techniques (VoIP).

It should also be appreciated that the approval signals may contain information relating to the device/user with which a telephone connection may be established. This can be done by providing information with the approval signal indicating the device (e.g. by using the telephone number of the device) and/or the user (e.g. by supplying a personal identity code). As an example, the user of the B-subscriber device may indicate with the approval signal that this approval signal is only for approving the establishment of a telephone connection with a particular user, said user being identified by a personal identity code. As another example, the approval signal of a user of the A-subscriber device may indicate the telephone number of a device for which a telephone connection is requested.

Furthermore, it is noted that the approval system does not necessarily refer to a client-server system. The invention may also be applicable in peer-to-peer networks, such as e.g. used for bittorrent applications, wherein a approval system or (some) functionality may be considered to be part of one of more of the user devices participating in the peer-to-peer network.

Finally, it should be appreciated that the approval system may be part of a telephony network or may be an external server that receives requests from the telephony network whether or not a telephone connection should be established.

The embodiments of claims 2 and 15 provide the advantage that the approval signal can be provided from the device used for establishing the telephone connection. However, it would also be possible to use separate approval devices, e.g. a personal computer capable of connecting to the internet for issuing an approval signal.

The embodiments of claims 3, 4, 16 and 17 provide the advantage that the approval signal can be issued in a simple manner, in particular by calling the number of the B-subscriber device.

The embodiments of claims 5 and 18 provide the advantage of notifying a user that an approval signal has been issued to establish a telephone connection with that user or one of his devices. The embodiments of claims 6 and 19 allow that the notification signal is received by the second approval device and/or the B-subscriber device.

The embodiments of claims 7 and 20 allow that an approval signal that is received first should be countered by an approval signal of the other side within a particular time period. Afterwards, the approval signal received first is invalid and a matching approval signal will not result in allowing the establishment of a telephone connection. The approval signal received first may be deleted from the system. Examples of time periods for the validity of the approval signal received first are 1 hour, 1 day, 1 week or 2 weeks.

If an approval signal is not matched by a counter approval signal, the issuer of the approval signal may be notified of this by a refusal signal as defined in the embodiments of claims 8 and 21.

The embodiments of claims 9, 10, 22 and 23 provide the advantage of identification of the users of the devices by means of personal identity codes in order to distinguish devices from users. A personal identity code may e.g. be used to couple a plurality of telephone numbers to a single personal identity code and to provide an approval signal for all telephone numbers. Reference is made to a co-pending international patent application of the applicant ("method and system for establishing a telephone connection") filed on the same date as the present application, the contents of the international application being incorporated in the present application by reference in its entirety.

The embodiments of claims 11 and 24 provide the advantage that the system blocks approval signals to prevent that a recipient is spammed with approval signals.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a schematic illustration of a system according to an embodiment of the invention;
FIG. 2 is a schematic illustration of an approval system according to an embodiment of the invention;
FIG. 3 is a time diagram illustrating steps of a method according to a first embodiment of the invention;
FIG. 4 is a time diagram illustrating steps of a method according to a second embodiment of the invention;
FIG. 5 is a time diagram illustrating steps of a method according to a third embodiment of the invention; and
FIG. 6 is a time diagram illustrating steps of a method according to a fourth embodiment of the invention.

### DETAILED DESCRIPTION OF THE DRAWINGS

Details about telecommunication infrastructures and procedures for establishing and terminating a telephone connection are assumed to be known to the skilled person and will not be described. As an example, for GSM telephony, reference is made to the book "The GSM System for Mobile Communications" by M. Mouly and M. Pautet, 1992 (ISBN 2-9057190-0-7). For UMTS telephony, reference is made to the book "WCDMA for UMTS"; edited by Harri Holma and Antti Toskala, 2001 (ISBN 0 471 48687 6).

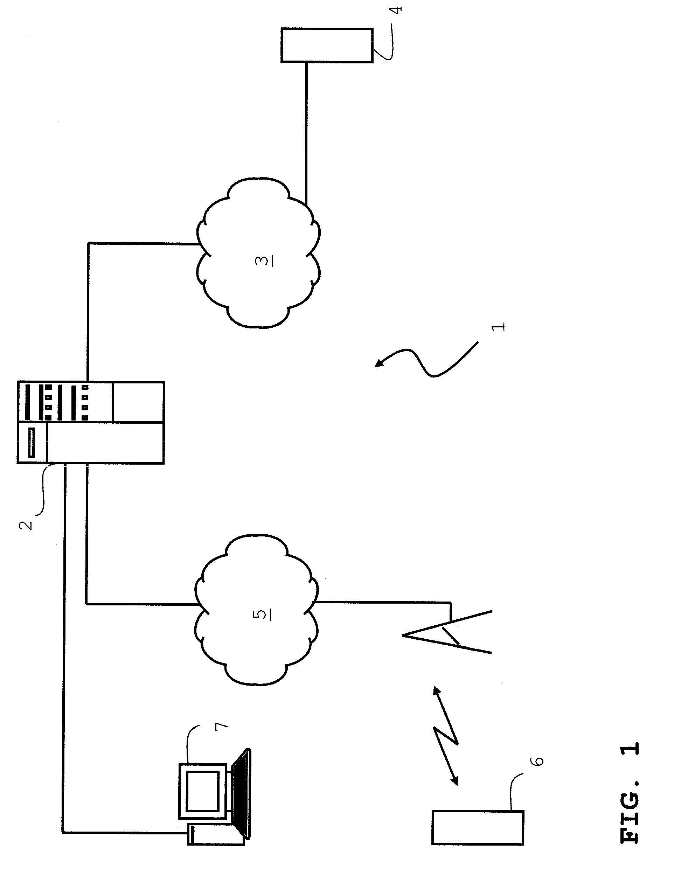

FIG. 1 shows a system 1 for telephone communication comprising an approval system 2. The approval system 2 may be part of a telephone exchange or be connected to the telephone exchange. The approval system 2, which may e.g. comprise a server, is connected via a first telecommunication network 3 to an A-subscriber device 4 and via a second telecommunication network 5 to a B-subscriber device 6. The first and second telecommunication networks 3, 5 may comprise one or more wired or wireless networks. In the situation of FIG. 1, the A-subscriber device 4 is connected to the telephone system 2 via a wired network, whereas the B-subscriber device 6 is partly connected via a wireless access network. The system 1 may also be suitable for internet telephony, including VoIP telephony. The user of the B-subscriber device 6 also possesses a personal computer 7 capable of communicating with the approval system 2.

The A-subscriber device 4 and B-subscriber device 6 may be any type of device suitable for telephony communication. The system 1 enables the establishment of a telephone connection via the networks 3 and 5 between the A-subscriber device 4 and the B-subscriber device 6. Of course, networks 3 and 5 may be the same network or networks using the same technology. In accordance with telephony convention, the A-subscriber device 4 (the call source) is assumed to be used by the calling party and the B-subscriber device (the call destination) is assumed to be used by the called party.

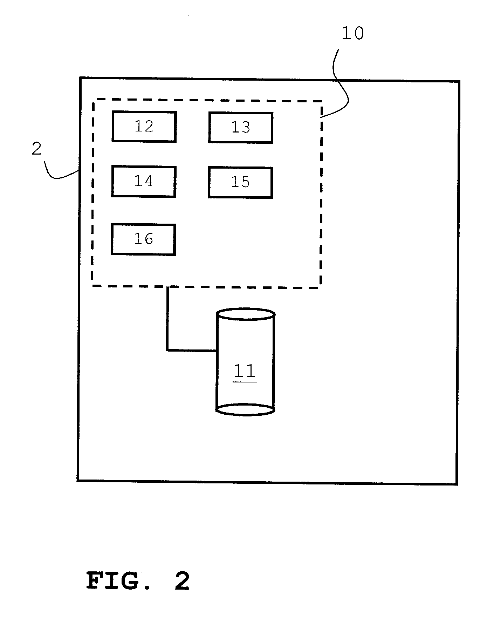

The specific functions of the approval system 2 are schematically illustrated in FIG. 2 and will now be described in further detail. The approval system 2 comprises a processor 10 and a memory 11. It should be appreciated that the system 1 is normally capable of connecting to more than the two telephone devices shown in FIG. 1. It should also be appreciated that the functions may be largely implemented as software code portions of one or more computer programs executed by the processor 10 (tasks may be distributed over multiple processors).

The memory 11 may comprise a database that contains personal identity codes of subscribers to the system 1 or, more particularly, to the approval system 2. Each of the personal identity codes may be linked to one or more telephone numbers. Initially, the subscribers to the approval system 2 are all blacklisted, i.e. a telephone connection can not be established between any of the subscribers and/or devices registered with the system. White-listing for e.g. couples of subscribers or devices in the database 11 of allowed telephone connections is only performed after receipts of approval signals.

The approval system 2 comprises an approval signal receiver 12 for receiving an approval signal from the A-subscriber device 4, the personal computer 7 and/or the B-subscriber device 6. The approval signal may be contained in or represented by a request for establishing a telephone connection.

The approval system 2 also has a notification signal transmitter 13 to inform the party for which the approval signal was received that the system awaits a reply.

The approval system 2 contains a determination module 14 to define a validity time period during which an approval signal can be matched to a corresponding signal. The validity of the approval signal that was received first may e.g. be 1 hour, 1 day, 1 week or 2 weeks.

The originator of the approval signal that was first received by the approval system 2 may be informed when no matching approval signal was received within the specified time period. To that end, the approval system 2 contains a refusal signal transmitter 15.

Finally, the approval system 2 comprises an approval signal blocker 16 to block approval signals beyond a certain amount.

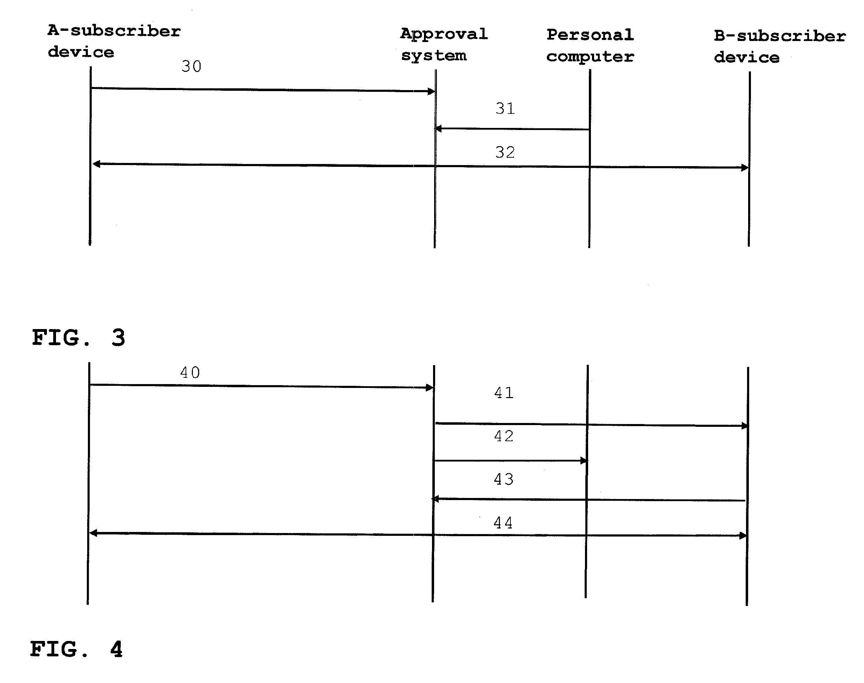

FIGS. 3-6 illustrate examples of methods according to embodiments of the invention.

In FIG. 3, step 30 represent the receiving by the approval system 2 of the first approval signal originating from the A-subscriber device 4. The approval signal may be the request for establishing a telephone connection with the B-subscriber device 6. The request for establishing a telephone connection is an implicit approval by the user of the A-subscriber device 4 to make and/or receive telephone call to/from the (user of the) B-subscriber device 6. This request is detected by the approval signal receiver 12. Instead of connection the A-subscriber device 4 with the B-subscriber device 6, information that the approval signal has been received from the A-subscriber device (or the user thereof) is stored in the memory 11. An approval signal may also be received from the user of the B-subscriber device. However, the approval signal is not necessarily received from the B-subscriber device 7 but may also be received from e.g. the personal computer 7, as indicated in step 31. The approval signals may contain information with which device/persona a telephone connection is allowed, e.g. by means of a telephone number of the other side or a personal identity code of the other side. The telephone connection is established in step 32. The establishment of the telephone connection may be triggered by another call from the A-subscriber device 4 to the B-subscriber device 6 of a call from the B-subscriber device 6 to the A-subscriber device 4. For this call, the approval signal receiver 12 determines from the memory 11 that a matching approval signal has been received from the (user of the) B-subscriber device 6 or the A-subscriber device, respectively, and that a telephone connection may now be established. However, the approval system 2 may also establish the telephone connection as a result from the first telephone call in step 30 and the receiving of the approval signal from the user of the B-subscriber device 6.

A validity period for the approval signal of step 30 may have been set in the approval system 2. If the validity period is e.g. one day, the determination module 14 of the approval system 2 determines that the telephone connection as indicated in step 32 can only be established if the approval signal of step 31 is received within one day from the receipt of the approval signal in step 30.

In the embodiment of FIG. 4, again an approval signal is received at the approval system 2 from the A-subscriber device (step 40). The notification signal transmitter 13 transmits a notification signal to the B-subscriber device 6 to which the telephone call was directed (step 41) in order to inform the user that a request (an approval signal) was received for establishing a telephone connection. If the memory 11 also stores further information to address further devices of the user of the B-subscriber device 6, such as an e-mail address of a user, the notification signal may also be transmitted to e.g. this e-mail address (step 42). The notification signal may contain information on the validity period during which approval signals are accepted. If an approval signal is received from the user of the B-subscriber device 6 (step 43) within the validity period, the telephone connection may be established between the A-subscriber device 4 and the B-subscriber device 6 (step 44).

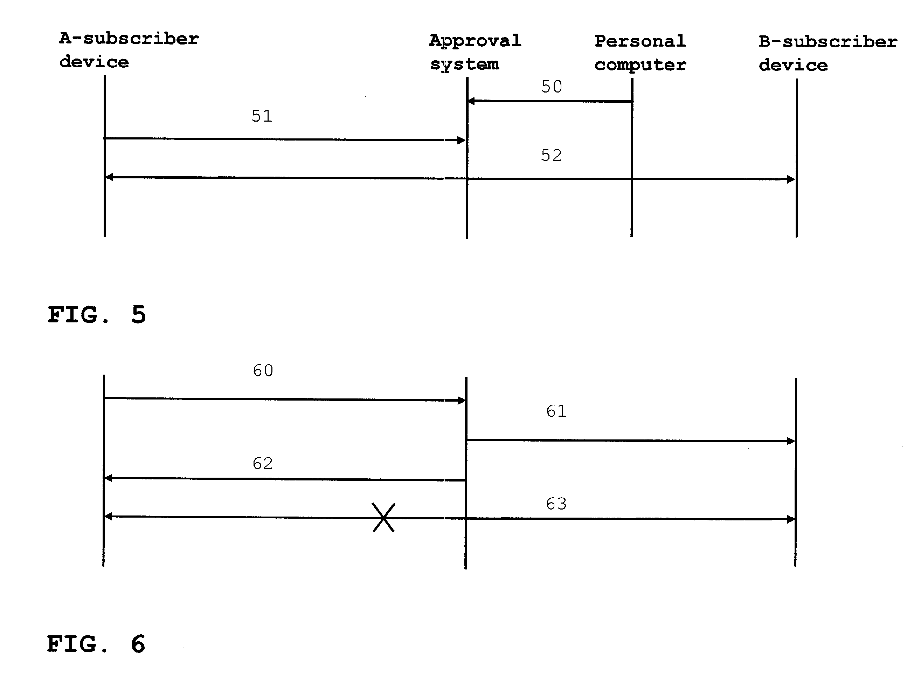

In the embodiment of FIG. 5, it is assumed that the first approval signal is received from the user of the B-subscriber device 6 (step 50). In step 51, the matching approval signal is received from the A-subscriber device 4 by the approval signal receiver 12 of the approval system 2. The latter approval signal made by a request to establish a telephone connection with the B-subscriber device 6. Since an approval signal has already been received from the user of the B-subscriber device 6 in step 50, the telephone connection may be established immediately (step 52).

As a final example, FIG. 6 shows that in step 60 an approval signal is received by the approval system 2 from the user of the A-subscriber device 4. In step 61, a notification signal is transmitted to the B-subscriber device 6. However, the user of the B-subscriber device 6, in this embodiment, does not respond with a matching approval signal (or does not respond within the validity period). The refusal signal transmitter 15 of the approval system 2 transmits a refusal signal in step 62 to the A-subscriber device 4 to inform the user that no matching approval signal was received (within the applicable validity period, if any). Consequently, a telephone connection can not be established between the A-subscriber device 4 and the B-subscriber device 6, indicated by the cross in step 63.

It should be appreciated that further embodiments than the exemplary embodiments of FIGS. 3-6 have been envisaged and fall under the scope of the present application. As an example, the memory 11 of the approval system 2 may also contain personal identity code of the subscribers of the A-subscriber device 4 and the B-subscriber device 6. If such personalization information is provided with the approval signals, users can be distinguished from devices. In this respect, reference is made to a co-pending international patent application of the applicant ("method and system for establishing a telephone connection") filed on the same date as the present application, the contents of the international application being incorporated in the present application by reference in its entirety. As an example, multiple telephone numbers and other addressing information may be coupled to a single personal identity code, such that an approval signal may result in approving communication with a particular person rather than with a particular device. Furthermore, the approval signal blocker 16 may be used to intercept multiple approval signals from a particular user and/or device to prevent that a recipient is spammed with approval signals.

## Claims

1. A method of establishing a telephone connection between an A-subscriber device and a B-subscriber device in a telephone system, comprising the steps by an approval system of:
- receiving a first approval signal from a first approval device before establishing said telephone connection, said first approval signal signaling the approval of a user of said A-subscriber device to establish a telephone connection with said B-subscriber device;
- receiving a second approval signal from a second approval device before establishing said telephone connection, said second approval signal signaling the approval of a user of said
B-subscriber device to establish a telephone connection with said A-subscriber device; and
- establishing said telephone connection between said A-subscriber device and said B-subscriber device only after receiving said first approval signal and said second approval signal.

2. The method according to claim 1, wherein said first approval device comprises said A-subscriber device and/or said second approval device comprises said B-subscriber device.

3. The method according to claims 1 or 2, wherein said first approval signal is received with a request for establishing said telephone connection with said B-subscriber device.

4. The method according to claim 3, wherein said request for establishing said telephone connection comprises the telephone number of said B-subscriber device.

5. The method according to one or more of the preceding claims, further comprising the step of transmitting a notification signal notifying a user of said second approval device.

6. The method according to claim 5, wherein said notification signal is transmitted to at least one of said second approval device and said B-subscriber device.

7. The method according to one or more of the preceding claims, further comprising the step of not establishing said telephone connection if a time difference between receiving said first approval signal and receiving said second approval signal exceeds a predefined time limit.

8. The method according to claim 7, further comprising the step of transmitting a refusal signal if said time difference has exceeded said predefined time limit.

9. The method according to one or more of the preceding claims, further comprising the step of receiving at least one personal identity code of at least one of the users of said A-subscriber device and said B-subscriber device.

10. The method according to claim 9, wherein said telephone connection is only established if at least one of said personal identity codes has been received.

11. The method according to one or more of the preceding claims, further comprising the step of blocking approval signals if the number of received approval signals exceeds a predetermined number.

12. A computer program for approving the establishment of a telephone connection, said computer program comprising software code portions, when installed on and executed by a computer system, for performing the method according to one or more of the claims 1-11.

13. A computer readable medium carrying the computer program of claim 12.

14. A system for establishing a telephone connection between an A-subscriber device and a B-subscriber device, said system comprising an approval system configured for:
- receiving a first approval signal from a first approval device before establishing said telephone connection, said first approval signal signaling the approval of a user of said A-subscriber device to establish a telephone connection with said B-subscriber device;
- receiving a second approval signal from a second approval device before establishing said telephone connection, said second approval signal signaling the approval of a user of said
B-subscriber device to establish a telephone connection with said A-subscriber device; and
- establishing said telephone connection between said A-subscriber device and said B-subscriber device only after receiving said first approval signal and said second approval signal.

15. The system according to claim 14, wherein said first approval device comprises said A-subscriber device and/or said second approval device comprises said B-subscriber device.

16. The system according to claim 14 or 15, wherein said approval system is configured to receive said first approval signal together with a request for establishing saida telephone connection with said B-subscriber device.

17. The system according to claim 16, wherein said approval system is configured to receive the telephone number of said B-subscriber device.

18. The system according to one or more of the claims 14-17, wherein said system further comprises a notification signal transmitter for notifying a user of said second approval device.

19. The system according to claim 18, wherein said notification signal transmitter is configured to transmit said notification signal to at least one of said second approval device and said B-subscriber device.

20. The system according to one or more of the claims 14-19, further comprising a determination module configured for determining if a time difference between receiving said first approval signal and receiving said second approval signal exceeds a predefined time limit.

21. The system according to claim 20, further comprising a refusal signal transmitter configured to transmit a refusal signal if said time difference has exceeded said predefined time limit.

22. The system according to one or more of the claims 14-21, further comprising a personal identity code receiver configured for receiving at least one personal identity code of at least one of the users of said A-subscriber device and said B-subscriber device.

23. The system according to claim 22, wherein said system is configured for only establishing of said telephone connection if at least one of said personal identity codes has been received.

24. The system according to one or more of the claims 14-23, further comprising an approval signal blocker configured for blocking approval signals if the number of received approval signals exceeds a predetermined number.
